# NOUVEAU FASCICULE DE BREVET EUROPEEN

(11) **EP 0 991 601 B2**
(45) Date de publication et mention de la décision concernant l'opposition: **16.01.2013**
(45) Mention de la délivrance du brevet: 30.03.2005
(21) Numéro de dépôt: 99915810.8
(22) Date de dépôt: 22.04.1999
(51) Int. Cl.: C03B 37/05

(54) **DISPOSITIF DE FIBRAGE DE LAINE MINERALE PAR CENTRIFUGATION LIBRE**
VORRICHTUNG ZUM ZERFASERN VON MINERALWOLLE DURCH FREIES ZENTRIFUGIEREN
DEVICE FOR DRAWING OUT MINERAL WOOL FIBRES BY FREE CENTRIFUGING

(30) Priorité: 24.04.1998 FR 9805198
(43) Date de publication de la demande: 12.04.2000
(73) Titulaire: SAINT-GOBAIN ISOVER, 92400 Courbevoie (FR)
(72) Inventeur: DUPOUY, Valérie, F-60520 La Chapelle en Serval (FR); DEBOUZIE, Alain, F-76650 Le Petit Couronne (FR)
(74) Mandataire: Teyssedre, Laurent
(86) Numéro de dépôt international: PCT/FR1999/000954
(87) Numéro de publication internationale: WO 1999/055631

(56) Documents cités:
- WO-A-92/06047
- WO-A-92/12940
- WO-A-96/36573
- WO-A-96/38391
- WO-A1-92/12941
- WO-A1-96/36573
- WO-A1-99/51535
- GB-A- 907 443
- US-A- 3 709 670
- US-A- 4 119 421

## Description

La présente invention se rapporte au domaine de la fabrication de fibres minérales à partir d'une matière étirable, et notamment à partir d'un matériau fondu à point de fusion élevé par exemple de type verre basaltique ou laitier de hauts fourneaux, en vue de la production de produits, notamment isolants, à base de fibres minérales. Plus précisément, l'invention concerne un perfectionnement aux techniques de fibrage dites à centrifugation libre dans lesquelles le matériau à fibrer est conduit à l'état fondu à la périphérie de roues de centrifugation et est entraîné par ces roues de sorte qu'une partie du matériau s'en détache et est transformée en fibres sous l'effet de la force centrifuge et que la partie restante non transformée est renvoyée vers une autre roue ou après la dernière roue retombe sous forme de grenailles.

Pour la mise en oeuvre des techniques de fibrage brièvement évoquées ci-dessus, on utilise généralement une machine comprenant trois ou quatre roues agencées en cascade, et capables de tourner autour d'axes sensiblement horizontaux, deux roues successives sur le trajet du matériau fondu tournant en sens inverse. La première roue est alimentée en matériau fondu par une goulotte et sert essentiellement à accélérer le matériau qui est renvoyé vers la seconde roue et ainsi de suite jusqu'à la dernière roue, le flux de matériau s'amenuisant à chaque roue à raison de la quantité de fibres formées.

Une telle machine comprend généralement en outre des moyens pour générer un courant d'air à la périphérie des roues de centrifugation dans le but d'assister la formation des fibres par un effet d'étirage et de prendre en charge la matière fibrée en la séparant de la matière infibrée (grenailles). Cette dernière est en effet indésirable car elle contribue à alourdir le produit final et à rendre son toucher particulièrement désagréable. Le courant d'air a aussi pour fonction d'acheminer la matière fibrée vers un organe récepteur, par exemple une bande sans fin munie de caissons d'aspiration, qui transporte les fibres vers les dispositifs de traitement en aval de la ligne tels un nappeur, une étuve de polymérisation des liants, etc...

Le courant d'air est le plus souvent introduit dans une direction sensiblement parallèle aux axes de rotation des roues, et entraîne ainsi les fibres dans une direction perpendiculaire à leur direction de formation.

La quantité de fibres fabriquées dépend du débit de matière déversée sur les roues de centrifugation et de l'efficacité du fibrage par lesdites roues.

Pour une machine donnée, il est possible en théorie d'augmenter la productivité en augmentant le débit de matière déversée mais cela n'est réalisable que dans une marge relativement limitée. En effet, une machine est conçue avec des roues de diamètres définis destinés à tourner à une vitesse déterminée. A partir d'un certain flux de matière alimentant la machine, il se produit un phénomène d'engorgement progressif des roues de centrifugation avec des conséquences néfastes directes sur la qualité du fibrage (en raison notamment de la modification de la température sur chaque roue et de l'excès de matière à traiter par chaque roue).

Cette baisse de qualité se traduit au niveau du produit final par une perte de propriétés notamment d'isolation thermique : ce n'est qu'en augmentant la densité du produit que l'on parvient à la valeur désirée du coefficient lambda (λ) de conductivité thermique. Le bénéfice résultant de la productivité accrue s'en trouve donc au moins réduit, si ce n'est complètement annulé.

Une alternative consiste à utiliser plusieurs dispositifs de fibrage fonctionnant en parallèle. Les solutions proposées jusqu'à présent comportent néanmoins toutes un certain nombre d'inconvénients.

Dans une première réalisation antérieure connue de US-A-3 709 670, deux jeux différents de roues de centrifugation sont placés côte à côte dans un même plan vertical dans le corps d'une même machine comportant deux goulottes d'alimentation en matière fondue. Les deux jeux diffèrent en ce que le premier est l'exact symétrique du second par rapport à un axe vertical, comme son reflet dans un miroir, deux roues au même niveau tournant en sens inverse. Cet agencement symétrique est destiné à éviter les interférences entre les courants d'air respectivement émis par chaque ensemble de roues de centrifugation.

L'inconvénient majeur de cet agencement symétrique est de nature économique, car il est nécessaire de disposer en permanence de deux jeux différents de pièces de rechange et d'effectuer l'entretien et la maintenance de deux machines de structure différente.

Une autre réalisation est connue de WO-A-92/06047, qui vise à pallier cet inconvénient, où deux machines de fibrage identiques sont placées côte-à-côte et alimentées en parallèle en matière fondue. Les machines sont pourvues de moyens de soufflage d'air associés à chacune des roues de centrifugation qui génèrent un courant d'air à proximité de la périphérie de la roue, le courant d'air ayant une composante de mouvement axiale suffisante pour emmener les fibres loin de la zone de fibrage et une composante tangentielle suffisante pour éviter les interactions entre les courants d'air adjacents.

A cet effet, les moyens de soufflage sont constitués par une lèvre d'étirage qui longe la périphérie de la roue sur un secteur angulaire déterminé et à l'intérieur de laquelle sont disposées des ailettes de déflexion de l'air inclinées d'un angle corotationnel avec la rotation de la roue, de façon à diriger l'air soufflé avec une composante tangentielle qui varie le long de la lèvre.

De tels moyens de soufflage sont également mis en oeuvre dans le dispositif connu de WO-A-92/12940 qui comporte lui aussi au moins deux machines de fibrage identiques placées côte-à-côte et alimentées en parallèle, dans lesquelles les roues de centrifugation sont de petit diamètre et ont des vitesses de rotation très élevées.

Cet agencement des moyens de soufflage a néanmoins l'inconvénient d'être compliqué car il impose de conserver un courant d'air adapté à chacune des roues de centrifugation. Or, les ailettes de déflexion sont des éléments sensibles, notamment aux vibrations dues à la rotation des roues d'autant plus fortes que la vitesse de rotation est élevée, et qui sont en outre exposés aux projections de grenaille qui risquent d'affecter leur inclinaison de façon nuisible à la direction du courant d'air.

La présente invention a pour but d'obvier à ces inconvénients et de fournir de nouveaux moyens pour permettre la production en grande quantité d'un produit à base de fibres minérales de bonne qualité.

A cet égard l'invention a pour objet un dispositif pour la fabrication de laine minérale selon la revendication 1.

Les inventeurs ont en effet mis en évidence le fait que la rencontre et la superposition des émissions de gaz de soufflage de deux machines adjacentes permet d'obtenir un produit à base de fibres minérales de très bonne qualité.

Ainsi, en l'absence de toute disposition particulière des moyens de soufflage telle que celles prévues dans l'art antérieur pour optimiser le flux de gaz soufflé et par suite le trajet des fibres produites, l'utilisation de deux machines de fibrage disposées côte à côte avec leurs axes principaux rigoureusement parallèles conduit à un produit très inhomogène avec un manque de cohésion et d'importantes variations de densité suivant la largeur de l'organe de réception. Ces défauts ne peuvent être rattrapés entièrement dans les étapes ultérieures du procédé et le produit présente des propriétés thermiques relativement faibles.

Contrairement à toute attente, puisque l'état antérieur enseigne d'éviter toute interférence entre les courants gazeux de deux machines adjacentes, il est apparu que l'homogénéité du produit augmente lorsqu'on oriente les machines de telle sorte que leurs courants gazeux respectifs se rencontrent et s'ajoutent entre deux machines adjacentes.

Les inventeurs ont constaté que la qualité du produit est liée à l'homogénéité des vitesses des fibres recueillies sur l'organe de réception, le profil des vitesses des fibres suivant le profil de vitesse du courant gazeux qui transporte les fibres.

Lorsqu'une seule machine est utilisée, ce profil de vitesses a une forme sensiblement gaussienne avec un maximum de vitesse au centre la chambre, approximativement en face des roues de centrifugation, la vitesse allant en diminuant en direction des parois de la chambre.

Lorsque deux machines sont placées côte à côte avec leurs axes parallèles sans interaction des courants gazeux adjacents, la circulation des courants gazeux autour des roues de centrifugation est telle que le profil de vitesse du courant gazeux total au niveau de l'organe de réception a sensiblement la forme de deux gaussiennes l'une à côté de l'autre, avec un minimum environ au centre de la chambre et deux maxima proches des parois avec une variation très importante du module de vitesse entre un minimum et un maximum.

Conformément à l'invention, il est apparu que si l'on oriente les machines de sorte que les courants gazeux se rencontrent et se superposent, non seulement la formation des fibres n'est pas gênée, mais encore un profil de vitesse très homogène peut être obtenu.

Ainsi, l'invention permet avantageusement, avec une orientation adaptée des machines adjacentes, d'obtenir un profil de vitesse tel que la composante axiale de la vitesse du courant gazeux total au niveau de l'organe de réception varie d'au plus 20 %, de préférence d'au plus 15 %, notamment d'au plus 10 %, sur une portion de préférence centrale de l'organe de réception correspondant à au moins environ 50 % de la largeur de l'organe de réception, de préférence au moins 60 %.

Ainsi, on assure une très bonne cohésion de la nappe de fibres recueillie sur l'organe de réception avec une répartition de matière (grammage) homogène.

De préférence, pour une meilleure homogénéité, l'angle entre les axes principaux de deux machines adjacentes est adapté pour que la composante axiale de la vitesse du courant gazeux au niveau de l'organe de réception varie de façon sensiblement symétrique sur la largeur de l'organe de réception.

Le procédé de fibrage sur chaque machine est adapté pour favoriser la formation de fibres au centre de la machine avec relativement peu de fibres éjectées sur les côtés d'une machine, de façon à permettre entre deux machines la circulation d'un courant d'air induit par les jets de gaz issus des moyens de soufflage, lequel va assister le transport des fibres à une vitesse souhaitée. A cet effet, le procédé est avantageusement tel que chaque machine comprend une série de quatre roues de centrifugation, l'agencement et la vitesse de rotation des roues de centrifugation étant adaptés pour qu'une partie du matériau à fibrer atteignant la quatrième roue soit renvoyée sur la troisième pour y être transformée en fibres.

Des conditions de fibrage avantageuses comprennent l'entraînement en rotation de la deuxième roue de chaque série à une vitesse supérieure ou égale à 6500 tr/min, en particulier supérieure ou égale à 8000 tr/min, pour un diamètre de roue inférieur ou égal à 240 mm, notamment de l'ordre de 180 à 240 mm.

Dans de telles conditions, la deuxième roue plus petite que d'ordinaire distribue une plus grande quantité de matière fondue sur la troisième roue et par conséquent sur la quatrième. En conséquence, ces deux dernières roues de la série ont une température élevée, qui favorise l'émission de fibres proche du point où la matière fondue a heurté la roue, au détriment d'une émission sur les côtés de la machine. Le double rebond sur la troisième roue permet de réguler la quantité de matière fibrée par chacune de ces roues et d'optimiser le rendement du fibrage.

Avec une plus grande quantité de matière fondue qui suit un trajet au centre de la machine entre les roues de centrifugation et le double rebond de ladite matière fondue sur la troisième roue à partir de la quatrième, le procédé assure une projection de fibres plus importante au centre de chaque machine par les parties inférieures des troisième et quatrième roues. Cette répartition spatiale particulière des fibres formées se révèle très avantageuse lorsque deux machines au moins sont disposées côte à côte.

L'invention a pour objet un dispositif pour la fabrication de fibres minérales suivant le procédé exposé ci-dessus. Il comprend principalement deux machines de fibrage placées côte à côte à l'entrée d'une chambre, chaque machine comprenant une série de roues de centrifugation agencées en cascade et entraînées en rotation autour d'axes ayant tous entre eux sensiblement la même direction (dite axe principal), deux roues consécutives de la cascade tournant en sens inverse, et comprenant des moyens de soufflage engendrant autour de la série de roues de centrifugation un courant gazeux dans une direction essentiellement parallèle à l'axe principal de la machine, le dispositif comprenant des moyens d'alimentation agencés de façon à déverser un matériau à fibrer à l'état fondu simultanément à la surface périphérique de la première roue de chaque machine, et comprenant en outre un organe récepteur disposé en regard des machines de fibrage dans ladite chambre.

Il est caractérisé en ce que deux machines adjacentes sont disposées avec leurs axes principaux respectifs formant un angle non nul entre eux. Cet angle ou chaque angle entre deux machines adjacentes étant adapté pour que les deux courants gazeux émis par les deux machines adjacentes se rencontrent et s'ajoutent.

En outre, la chambre ayant deux parois verticales s'étendant de part et d'autre de l'organe récepteur sensiblement parallèlement à partir des machines situées à l'entrée, une première machine adjacente à la première paroi et une deuxième machine adjacente à la seconde paroi sont disposées avec leurs axes principaux respectifs convergeant vers le centre de la chambre, de préférence chacun avec un angle d'au moins 2° par rapport à la direction des parois, notamment de l'ordre de 2 à 10°.

Il est difficile de définir de manière générale une orientation adaptée pour que les courants gazeux émis par deux machines adjacentes se rencontrent et s'ajoutent.

En effet, la circulation de gaz autour et entre les machines dépend notamment de l'aérodynamisme de l'environnement des machines, en particulier de la forme de la chambre à l'entrée de laquelle les machines sont installées, et des conditions de fonctionnement notamment de la vitesse de rotation des roues de centrifugation et des vitesses relatives des jets de gaz émis à proximité des roues.

Selon l'invention, il est avantageux de disposer deux machines avec leurs axes principaux convergeant vers le centre de la chambre. L'homme du métier est à même de déterminer sans difficulté l'orientation adaptée à chaque configuration à la suite d'un nombre raisonnable d'essais dont le principe sera exposé plus loin.

Avantageusement, la première machine est agencée de sorte que sa première roue de centrifugation renvoie le matériau fondu à l'opposé de la première paroi, et la deuxième machine est agencée de sorte que sa première roue de centrifugation renvoie le matériau fondu vers la seconde paroi et l'axe de la deuxième machine forme avec la seconde paroi un angle supérieur à celui formé par l'axe de la première machine avec la première paroi.

Cette différence d'orientation est tout à fait surprenante. En effet, dans la pratique courante les machines de fibrage connues distribuent les fibres de façon à peu près centrée sur la largeur de la machine.

On aurait donc pu s'attendre à devoir faire converger les deux machines d'un même angle par rapport à la paroi pour obtenir une répartition de fibres symétrique par rapport à l'axe de l'organe de réception. Sans vouloir être lié par une quelconque théorie scientifique, il semblerait qu'une convergence dissymétrique soit au contraire rendue nécessaire par le fait que les moyens de soufflage produisent un courant gazeux d'étirage plus important du côté des deuxième et quatrième roues que des première et troisième roues, responsable d'un effet de paroi plus important sur un côté du dispositif : le courant de gaz d'étirage qui longe la seconde paroi (côté 2ème et 4ème roue) crée le long de la seconde paroi une dépression plus importante que celle créée par le courant de gaz d'étirage qui longe la première paroi (côté 1 ère et 3ème roue), en raison de la différence de débit gazeux de ces deux courants.

De préférence, le premier angle est de l'ordre de 2 à 6°, notamment de l'ordre de 4°, et le second angle est de l'ordre de 3 à 10°, notamment de l'ordre de 4 à 8°.

La disposition convergente réduit en outre l'émission de fibres vers les parois de la chambre et évite ainsi la formation d'amas à partir des fibres sur les parois, ces amas affectant notablement les qualités du produit final lorsqu'ils sont entraînés dans la nappe de fibres.

Comme exposé précédemment, il est préférable dans tous les modes de réalisation de s'arranger pour que l'émission de fibres soit réduite sur les côtés de chaque machine de fibrage. A cet égard, le dispositif selon l'invention comprend avantageusement dans chaque machine une deuxième roue ayant un diamètre inférieur ou égal à 240 mm, notamment de l'ordre de 180 à 240 mm.

De façon avantageuse, les machines comprennent des troisième et quatrième roue d'un diamètre plus élevé, notamment de l'ordre de 300 à 400 mm.

En outre, pour obtenir un double rebond de matière fondue sur la troisième roue, il est avantageux de disposer la deuxième roue de telle sorte qu'une ligne joignant les centres des deux premières roues fasse un angle supérieur à 20°, de préférence de l'ordre de 25°, sous l'horizontale.

Les roues de centrifugation peuvent être arrangées entre elles de façon courante pour permettre l'établissement du trajet souhaité de matière fondue entre les roues. Un arrangement avantageux est tel que la surface périphérique d'une roue est éloignée de le la surface périphérique d'une roue adjacente d'une distance d'au moins 35 mm, de préférence d'au moins 40 mm.

Un tel éloignement permet au jet de fibres émises par une roue de bien se développer sans interaction nuisible avec le jet de fibres d'une roue adjacente, tout en assurant une bonne répartition spatiale de l'ensemble des fibres produites par la machine.

Une autre caractéristique importante pour réaliser le fibrage selon l'invention est le contrôle de la température des roues de centrifugation. On a vu que la température d'une roue dépend en partie de la quantité de matière fondue déversée sur cette roue. Elle est également influencée par la présence de courant gazeux soufflés à la périphérie de la roue. Afin d'éviter un refroidissement indésiré de la roue, il est avantageux d'éviter que le courant gazeux arrive avec une trop grande incidence sur la surface périphérique de la roue. De préférence, le courant est émis dans une direction telle qu'il effleure seulement la surface périphérique de la roue. Cela a aussi pour effet de ne pas perturber la formation des fibres. A cet égard, il est avantageux que les moyens de soufflage débouchent à proximité d'une roue de centrifugation en s'écartant de l'axe de rotation de la roue d'un angle de l'ordre de 10 à 16°, en particulier de l'ordre de 13°.

Les moyens de soufflage peuvent prendre des formes très variées. Pour éviter les jets de fibres sur les côtés d'une machine, il est néanmoins préférable de réaliser les moyens de soufflage associés à une roue sous forme d'un orifice continu, notamment d'une lèvre annulaire concentrique avec la roue, afin de ne pas produire de rupture d'arrivée d'air. Un tel orifice continu sera avantageusement tel que la vitesse moyenne du gaz soufflé varie d'au plus 10 % sur toute la longueur de l'orifice.

Dans une forme de réalisation préférée du point de vue du contrôle de l'émission des fibres, les moyens de soufflage comprennent une ou plusieurs lèvre(s) d'étirage agencée(s) de façon à produire un courant d'air continu longeant sensiblement toute l'enveloppe extérieure des surfaces périphériques des roues de centrifugation.

Pour assurer un étirage efficace des fibres, et contribuer à leur transport, lorsque le procédé de fibrage est tel que les fibres sont émises principalement dans la partie inférieure d'au moins une roue de centrifugation, les moyens de soufflage sont avantageusement agencés pour produire un courant gazeux plus large le long d'une portion inférieure de ladite roue, notamment de la dernière et éventuellement l'avant-dernière roue, de la cascade.

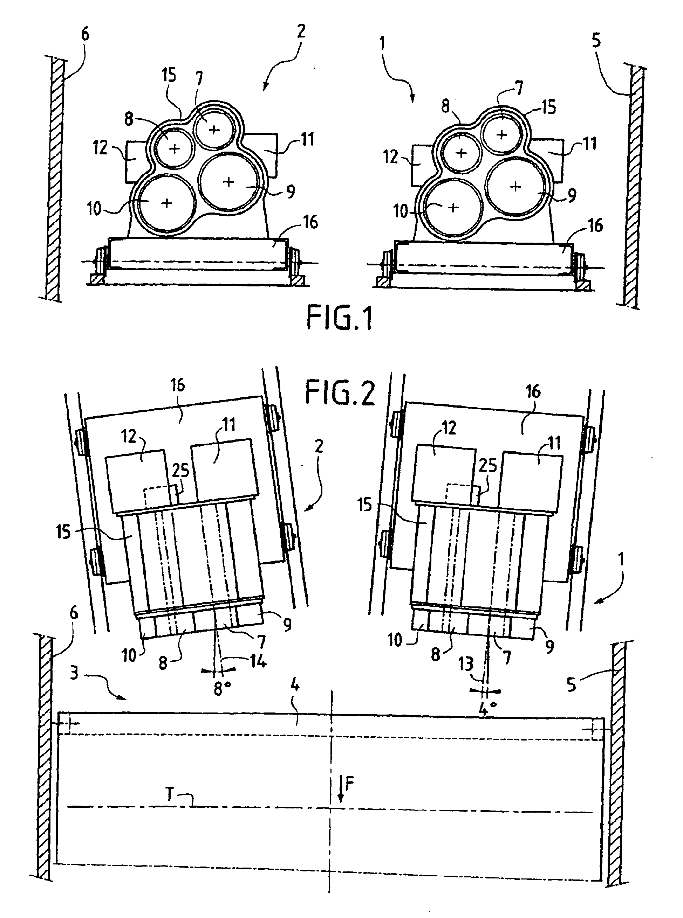

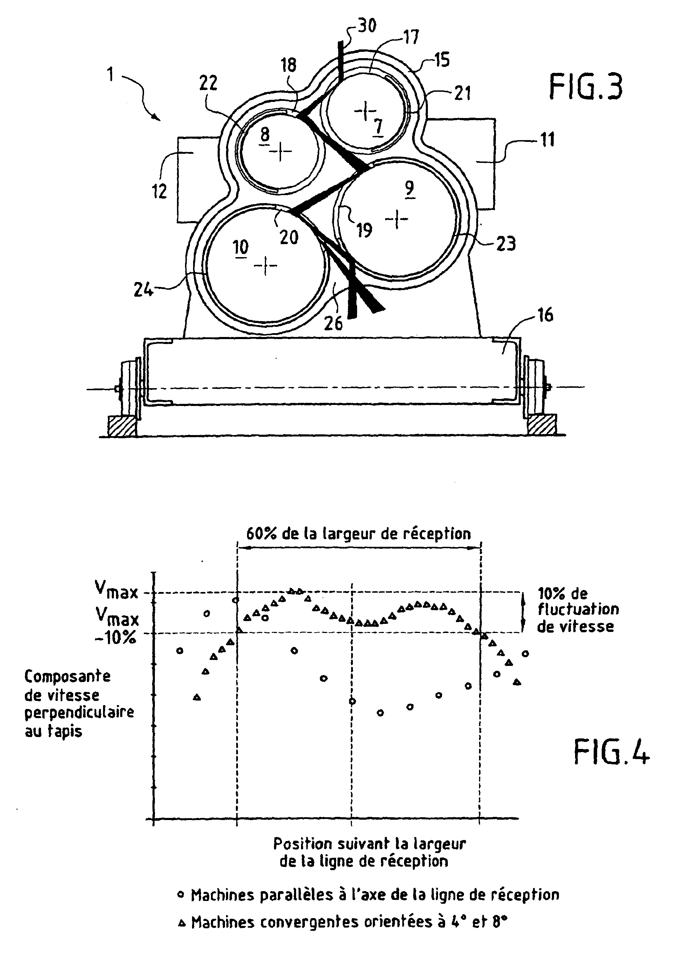

D'autres caractéristiques et avantages de l'invention apparaîtront de la description détaillée qui va suivre, faite en regard des dessins annexés sur lesquels :
- **les** **figures 1 et 2** représentent deux vues respectivement de face et en élévation d'un dispositif selon l'invention,
- **la** **figure 3** représente en fonctionnement une machine de fibrage faisant partie du dispositif de la figure 1,
- **la** **figure 4** représente un diagramme schématique illustrant la répartition des vitesses des courants gazeux émis par le dispositif selon l'invention.

La figure 1 est une vue de face d'un dispositif de fibrage selon l'invention, vu côté fibres. Ce dispositif est essentiellement constitué de deux machines de fibrage 1, 2 identiques disposées à l'entrée d'une chambre 3 de réception des fibres, dans laquelle se trouve un organe récepteur tel qu'un tapis ou une bande sans fin 4, munie de caissons aspirants non représentés, circulant entre les deux parois verticales parallèles 5, 6 de la chambre de réception 3.

Les deux machines 1, 2 comportent une série de quatre roues de centrifugation 7, 8, 9, 10, dans lesquelles la première roue 7 est la plus petite, la deuxième roue 8 est très légèrement plus grande, les troisième 9 et quatrième 10 roues étant les plus grandes et sensiblement de même diamètre.

Les roues 7, 8, 9, 10 sont disposées suivant un assemblage mettant leurs surfaces périphériques à proximité les unes des autres, espacées de l'ordre de 40 mm. La ligne joignant le centre des première et deuxième roues 7, 8 fait un angle d'environ 25° sous l'horizontale.

Ces roues 7, 8, 9, 10 sont mues en rotation au moyen de blocs-moteurs 11, 12, les deux roues de droite 7, 9 sont entraînées par exemple dans le sens trigonométrique alors que les deux roues de gauche 8, 10 sont entraînées en sens inverse, de sorte que deux roues consécutives sur le trajet du matériau à fibrer (qui descend de la plus haute roue 7 à la plus basse 10) tournent en sens inverse.

Les quatre roues 7, 8, 9, 10 sont montées sur quatre arbres sensiblement parallèles entre eux définissant respectivement les axes principaux 13, 14 de chaque machine visibles sur la figure 2. Les arbres sont contenus dans un caisson 15 de forme profilée pour épouser au plus près les contours des éléments internes. Les blocs-moteurs 11, 12 sont avantageusement disposés de coté dans une configuration permettant à l'air de circuler librement tout autour du caisson 15.

Les deux machines 1, 2 sont en outre séparées par un espace vide permettant le passage d'air entre les deux machines. De même, l'espace situé de chaque côté des machines 1, 2 est laissé libre pour permettre le passage d'air induit entre les machines 1, 2 et les parois 5, 6 de la chambre 3 de réception.

Chaque machine 1, 2 est montée sur un châssis 16 reposant au sol sur des pieds ou des roues roulant dans des rails, ce qui permet éventuellement de déplacer les machines pour leur entretien.

Les rails sont fixés au sol de telle sorte que l'axe principal 13 de la machine 1 fait un angle d'environ 8° avec la direction des parois 5, 6, qui est aussi l'axe de la ligne de réception (direction d'avancement de la bande 4 indiquée par la flèche F), alors que l'axe principal 14 de la machine 2 fait un angle d'environ 4° avec la direction des parois 5, 6.

En variante, les deux machines 1, 2 pourraient être montées sur des tourelles orientables, déplacables le cas échéant pour l'entretien des machines.

Chaque machine 1, 2 est équipée en outre de moyens de soufflage d'air d'étirage constitués par des couronnes 17, 18, 19, 20 concentriques avec les roues 7, 8, 9, 10 et pourvues d'orifices 21, 22, 23, 24 formant des lèvres d'étirage. Avantageusement, les couronnes 17, 18, 19, 20 sont disposées de façon que leur surface externe soit coplanaire avec la face arrière des roues 7, 8, 9, 10. L'absence de toute partie saillante sur les côtés des roues évite l'ancrage de fibres sur la façade de la machine, dont l'accumulation entre les roues est nuisible au bon fonctionnement de la machine.

Les orifices 21, 22, 23, 24 longent la surface périphérique respectivement des roues 7, 8, 9, 10 sur une longueur telle qu'elles permettent le passage d'un courant gazeux continu suivant sensiblement toute l'enveloppe extérieure des surfaces périphériques des roues 7, 8, 9, 10.

L'air de soufflage est acheminé vers les lèvres d'étirage au moyen d'un ventilateur 25 avantageusement disposé en partie basse du caisson 15 : l'air aspiré de l'atmosphère ambiante est injecté à l'intérieur du caisson 15, où il circule tout autour des arbres entraînant les roues, avant de sortir par les orifices 21, 22, 23, 24. Au cours de son trajet dans le caisson 15 à partir du bas vers les orifices 21, 22, 23, 24, l'air voit sa vitesse s'homogénéiser de sorte que la vitesse de l'air éjecté par un orifice ne varie que d'au plus 10 % le long de ce dernier. La vitesse d'éjection en sortie de lèvre varie en fonction de l'emplacement de la couronne selon l'espace disponible pour l'air dans le caisson 1 5 autour des arbres : elle est maximale pour la couronne inférieure 20 et minimale pour la couronne 17 qui est la plus haute.

Cette homogénéisation de la vitesse de l'air soufflé par circulation autour d'un arbre permet d'optimiser l'étirage des fibres sur la roue associée.

Chaque machine 1, 2 peut en outre être équipée de moyens 26 de refroidissement de la surface située entre les roues 7, 8, 9, 10, notamment par circulation d'eau (type water-jacket). Grâce à l'espacement relativement grand entre les roues, ce water-jacket peut être formé d'une seule pièce, assurant un refroidissement de la totalité de la surface.

De préférence, les couronnes 17, 18, 19, 20 sont agencées de façon à affleurer à la surface de la façade de la machine 1, 2 qui porte les roues 7, 8, 9, 10, cette façade pouvant le cas échéant être constituée par le water-jacket 26.

Le fonctionnement du dispositif est exposé ci-après, le détail de fonctionnement d'une machine étant illustré sur la figure 3.

Lorsqu'on déverse une matière fondue, telle que du verre basaltique 30, simultanément sur la première roue 7 de chaque machine 1, 2, la matière 30 est accélérée sur la roue 7, qui la renvoie sur la roue 8 et ainsi de suite sur les roues 9 et 10. Principalement sur les troisième et quatrième roues 9, 10 mais aussi en partie sur la deuxième roue 8 et beaucoup moins sur la première roue 7, une partie du matériau entraîné en rotation par la roue se détache de cette dernière sous forme de gouttelettes qui sont transformées en fibres sous l'effet de la force centrifuge, alors que la partie restante est renvoyée vers une autre roue ou après la dernière roue retombe sous forme de grenaille. Le flux de matière passant d'une roue à l'autre s'amenuise ainsi à chaque roue à raison de la quantité de fibres formées.

Les fibres formées par chaque roue sont étirées en direction axiale par l'air d'étirage sortant des lèvres 21, 22, 23, 24 lequel air assure en partie le transport des fibres vers le tapis 4 de réception dans la chambre 3 où règne également une aspiration d'air dans la même direction axiale.

Sur le tapis 4, les fibres reçues des machines 1 et 2 sont recueillies sous forme d'une nappe d'épaisseur variable en fonction du débit de matière fondue alimentant les machines 1, 2 et de la vitesse d'avancement du tapis 4. Les machines 1, 2 comprennent également des moyens d'amenée d'un liant, non représentés, connus en soi, qui permettent de lier les fibres entre elles dans la nappe.

Comme on le voit sur la figure 3, la formation de fibres selon l'invention a avantageusement lieu principalement en partie centrale des machines 1, 2 grâce à un trajet adapté du matériau fondu 30 qui effectue un double rebond sur la troisième roue 9. Ce trajet est en outre avantageux pour assurer un rendement de fibrage élevé.

Ce trajet peut être obtenu en faisant tourner la deuxième roue 8 à une vitesse suffisamment élevée pour que le jet de matière fondue heurte la troisième roue en un point (ou sur une zone) d'impact relativement proche du sommet de la troisième roue. Des conditions de fibrage avantageuses comprennent l'entraînement en rotation de la deuxième roue de chaque série à une vitesse supérieure ou égale à 6500 tr/min pour un diamètre de roue inférieur ou égal à 240 mm.

Le refroidissement de la surface entre les roues 7, 8, 9, 10 permet d'éviter l'accumulation de matière fondue chaude par adhésion à la façade : au contraire la matière fondue 30 éventuellement éjectée sur la façade, fige en refroidissant et tombe sous l'effet de son propre poids.

Avec une façade ainsi maintenue propre en permanence, les machines 1, 2 forment des fibres qui disposent d'un espace suffisant autour des roues 7, 8, 9, 10 pour s'épanouir en forme de tore de fibres coaxial avec la roue en direction de la chambre de réception 3.

Eventuellement, si les lèvres d'étirage 21, 22, 23, 24 sont creusées de façon oblique dans les couronnes 17, 18, 19, 20 de manière à déboucher suivant un angle de l'ordre de 10 à 16° par rapport à l'axe de rotation des roues, l'art d'étirage peut aussi participer au développement d'un tore large. Par ailleurs, l'air soufflé de façon oblique évite de trop refroidir les roues et permet de maintenir les conditions d'éjection des fibres.

Les courants d'air d'étirage, en combinaison avec la rotation des roues à grande vitesse, conduisent en outre à la formation de courants d'air induits par la libre circulation d'air entre et autour des machines de fibrage 1, 2.

L'orientation convergente des machines 1, 2 par rapport à la direction des parois 5, 6 de la chambre de réception 3, permet de contrer l'effet de paroi par lequel le jet de fibres émis par une machine est aspiré vers la paroi voisine sous l'action de la dépression créée par les jets gazeux issus par les moyens de soufflage le long des parois. Selon l'invention, les courants d'air soufflés et induits émis par les deux machines adjacentes convergent, c'est-à-dire qu'ils se rencontrent et s'ajoutent dans la région frontale située entre les machines 1, 2 et s'écartent sensiblement des parois 5, 6 pour donner des conditions améliorées d'étirage et de transport des fibres.

La nappe de fibres recueillie sur le tapis 4 présente une bonne cohésion, avec un grammage homogène (absence de trous ou de creux dans la nappe).

L'effet de l'orientation des machines 1, 2 sur l'homogénéité du fibrage est illustré par la figure 4. Sur cette figure, on a représenté la variation de la composante de vitesse des courants gazeux au niveau du tapis 4 dans une direction horizontale parallèle à l'axe du tapis, c'est-à-dire perpendiculaire au tapis lorsqu'il est incliné en fonction de la position en largeur sur le tapis 4.

Ces mesures de vitesse ont été effectuées avec un tube de pitot et un anémomètre à hélice sur plusieurs transversales T à l'intérieur de la chambre de réception à raison de 1 2 mesures régulièrement réparties sur la largeur du tapis 4.

Ce profil de vitesse est représentatif du profil de vitesse des éléments projetés par éjection centrifuge à partir de machines de fibrage : en effet, le même profil a été obtenu en mesurant les vitesses de gouttelettes d'huile présentes dans le même écoulement gazeux produit par une maquette aéraulique à l'échelle 1/8 par rapport à une ligne industrielle, les mesures de vitesses étant dans ce cas effectuées par une méthode optique par laser dite Anémométrie Doppler Laser. Ces mesures ont été réalisées à l'UMR 6614 du CORIA. Ces mesures donnent des cartographies détaillées en deux dimensions (2D) de la vitesse en tout point de la réception, à partir desquelles on peut tirer un graphe tel que celui de la figure 4.

Ce graphe montre que lorsque les machines sont disposées avec leurs axes principaux respectifs rigoureusement parallèles à l'axe de ligne de réception et à la direction des parois de la chambre, le profil de vitesse présente un maximum à environ un quart (¼) de la largeur du tapis, un minimum à environ deux tiers (2/3) de la largeur du tapis, la vitesse augmentant à nouveau sur le dernier tiers. Ce profil de vitesse illustre l'effet de paroi énoncé plus haut. En outre, la variation de vitesse entre le maximum et le minimum est de plus de 30 %. Il en résulte, comme le confirme la réalité industrielle, un produit très inhomogène en grammage, présentant un nombre élevé de trous avec peu de cohésion.

Au contraire, lorsque les machines sont disposées de façon à faire converger les courants gazeux, on observe un profil de vitesse avec des variations très différentes : deux maxima à environ un tiers (1/3) et deux tiers (2/3) de la largeur de réception, un minimum environ à la moitié de la largeur de réception, la variation de vitesse entre ces extrêma étant de l'ordre de seulement 10 %. Grâce à la très faible variation de vitesses sur environ 60 % de la largeur de réception, la nappe de fibres obtenue est très homogène et le produit à des qualités très satisfaisantes.

## Revendications

1. Dispositif pour la fabrication de fibres minérales, comprenant au moins deux machines (1, 2) de fibrage placées côte-à-côte à l'entrée d'une chambre (3), chaque machine (1, 2) comprenant une série de roues (7, 8, 9, 10) de centrifugation agencées en cascade et entraînées en rotation autour d'axes ayant tous entre eux sensiblement la même direction dite axe principal (13, 14), deux roues consécutives de la cascade tournant en sens inverse, et comprenant des moyens de soufflage (17, 18, 19, 20) engendrant autour de la série de roues de centrifugation un courant gazeux dans une direction essentiellement parallèle audit axe principal, le dispositif comprenant des moyens d'alimentation agencés de façon à déverser un matériau (30) à fibrer à l'état fondu simultanément à la surface périphérique de la première roue (7) de chaque machine (1, 2),
et comprenant en outre un organe récepteur (4) disposé en regard des machines (1, 2) de fibrage dans ladite chambre (3), **caractérisé en ce que** les axes principaux (13, 14) de deux machines adjacentes (1, 2) sont disposés suivant un angle non nul, cet angle ou chaque angle entre deux machines adjacentes étant adapté pour que les deux courants gazeux émis par les deux machines adjacentes (1, 2) se rencontrent et s'ajoutent, et **en ce que** la chambre (3) ayant deux parois verticales (5, 6) s'étendant de part et d'autre de l'organe récepteur (4) sensiblement parallèlement à partir des machines (1, 2) situées à l'entrée, une première machine (1) adjacente à la première paroi (5) et une deuxième machine (2) adjacente à la seconde paroi (6) sont disposées avec leurs axes principaux respectifs (13, 14) convergeant vers le centre de la chambre (3), de préférence avec un angle d'au moins 2° par rapport à la direction des parois (5, 6).

2. Dispositif selon la revendication 1, **caractérisé en ce que** la première machine (1) est agencée de sorte que sa première roue (7) de centrifugation renvoie le matériau fondu (30) à l'opposé de la première paroi (5), et la deuxième machine (2) est agencée de sorte que sa première roue (7) de centrifugation renvoie le matériau fondu (30) vers la seconde paroi (6) **et en ce que** l'axe (14) de la deuxième machine (2) forme avec la seconde paroi (6) un angle supérieur à celui formé par l'axe (13) de la première machine (1) avec la première paroi (5).

3. Dispositif selon la revendication 2, **caractérisé en ce que** le premier angle est de l'ordre de 2 à 6°, de préférence de l'ordre de 4°, et le second angle est de l'ordre de 2 à 10°, de préférence de l'ordre de 4 à 8°.

4. Dispositif selon l'une quelconque des revendications 1 à 3, **caractérisé en ce que** dans chaque machine (1, 2), la deuxième roue (8) de centrifugation a un diamètre inférieur ou égal à 240 mm.

5. Dispositif selon la revendication 4, **caractérisé en ce que** une ligne joignant les centres des deux premières roues (7, 8) de centrifugation fait un angle supérieur à 20°, de préférence de l'ordre de 25°, sous l'horizontale.

6. Dispositif selon l'une quelconque des revendications 1 à 5, **caractérisé en ce que** la périphérie d'une roue est éloignée de la périphérie d'une roue adjacente d'une distance d'au moins 40 mm.

7. Dispositif selon l'une quelconque des revendications 1 à 6, **caractérisé en ce que** les moyens de soufflage (17, 18, 19, 20) comprennent au moins une lèvre d'étirage (21, 22, 23, 24) agencée(s) de façon à produire un courant d'air continu longeant sensiblement toute l'enveloppe extérieure des surfaces périphériques des roues de centrifugation (7, 8, 9, 10).

8. Dispositif selon l'une quelconque des revendications 1 à 7, **caractérisé en ce que** les moyens de soufflage (17, 18, 19, 20) sont agencés pour produire un courant gazeux plus large le long d'une portion inférieure d'au moins une roue de la cascade.

9. Dispositif selon l'une quelconque des revendications 1 à 8, **caractérisé en ce que** les moyens de soufflage (17, 18, 19, 20) débouchent à proximité d'une roue de centrifugation en s'écartant d'un angle de l'ordre de 10 à 16° par rapport à l'axe de rotation de la roue.

10. Dispositif selon l'une quelconque des revendications 1 à 9, **caractérisé en ce qu'il** comprend entre deux machines (1, 2) de fibrage adjacentes un espace ouvert permettant la circulation d'air entre les machines (1, 2).

## Claims

1. Device for the manufacture of mineral fibres, comprising at least two fiberizing machines (1, 2) placed side by side at the entrance of a chamber (3), each machine (1, 2) comprising a series of centrifuging wheels (7, 8, 9, 10) arranged in cascade and driven in rotation about axes all having with regard to one another substantially the same direction (so-called main axis) (13, 14), two consecutive wheels of the cascade rotating in opposite directions, and comprising blowing means (17, 18, 19, 20) generating a gas stream around the series of centrifuging wheels in a direction substantially parallel to the main axis,, the device comprising feeding means arranged so as to pour a material (30) to be fiberized in the molten state simultaneously at the peripheral surface of the first wheel (7) of each machine (1, 2),
and additionally comprising a gathering device (4) positioned facing the fiberizing machines (1, 2) in the said chamber (3), **characterized in that,** the main axes (13,14) of two adjacent machines (1,2) are positioned along a non-zero angle, this angle or each angle between two adjacent machines being adjusted in order for two gas streams emitted by the two adjacent machines (1, 2) to meet and combine, **and in that** the chamber (3) having two vertical walls (5,6) extending on either side of the gathering device (4) in a substantially parallel way starting from the machines (1, 2) situated at the entrance, a first machine (1) adjacent to the first wall (5) and a second machine (2) adjacent to the second wall (6) are positioned with their respective main axes (13, 14) converging towards the centre of the chamber (3), preferably with an angle of at least 2° with respect to the direction of the walls (5, 6).

2. Device according to Claim 1, **characterized in that** the first machine (1) is arranged so that its first centrifuging wheel (7) conveys the molten material (30) away from the first wall (5) and the second machine (2) is arranged so that its first centrifuging wheel (7) conveys the molten material (30) towards the second wall (6) **and in that** the axis (14) of the second machine (2) forms, with the second wall (6), an angle greater than that formed by the axis (13) of the first machine (1) with the first wall (5).

3. Device according to claim 2, **characterized in that** the first angle is of the order of 2 to 6°, preferably of the order of 4°, and the second angle is of the order of 3 to 10°, preferably of the order of 4 to 8°.

4. Device according to any one of Claims 1 to 3, **characterized in that,** in each machine (1, 2), the second centrifuging wheel (8) has a diameter of less than or equal to 240 mm.

5. Device according to Claim 4, **characterized in that** a line joining the centres of the first two centrifuging wheels (7, 8) forms an angle of greater than 20°, preferably of the order of 25°, under the horizontal.

6. Device according to any one of Claims 1 to 5, **characterized in that** the periphery of a wheel is separated from the periphery of an adjacent wheel by a distance of at least 40 mm.

7. Device according to any one of Claims 1 to 6, **characterized in that** the blowing means (17, 18, 19, 20) comprise at least one drawing lip (21, 22, 23, 24) arranged so as to produce a continuous air stream bordering substantially the combined exterior of the peripheral surfaces of the centrifuging wheels (7, 8, 9, 10).

8. Device according to any one of Claims 1 to 7, **characterized in that** the blowing means (17, 18, 19, 20) are arranged in order to produce a broader gas stream along a lower portion of at least one wheel of the cascade.

9. Device according to any one of Claims 1 to 8, **characterized in that** the blowing means (17, 18, 19, 20) emerge close to a centrifuging wheel while departing by an angle of the order of 10 to 16° with respect to the rotational axis of the wheel.

10. Device according to any one of Claims 1 to 9, **characterized in that** it comprises, between two adjacent fiberizing machines (1, 2), an open space which allows air to circulate between the machines (1, 2).

## Patentansprüche

1. Vorrichtung zur Herstellung von Mineralfasern mit mindestens zwei seitlich nebeneinander angeordneten Zerfaserungsmaschinen (1, 2) am Eintritt in eine Kammer (3), wobei jede Maschine (1, 2) eine Serie von Schleuderrädem (7, 8, 9, 10) aufweist, die kaskadenförmig angeordnet sind und um Achsen, die alle im wesentlichen die gleiche Richtung haben und als Hauptachse (13, 14) bezeichnet werden, drehend angetrieben werden, wobei zwei aufeinanderfolgende Räder der Kaskade gegensinnig drehen, und Gebläseeinrichtungen (17, 18, 19, 20) aufweist, die um die Serie von Schleuderrädem einen Gasstrom in einer zu der Hauptachse im wesentlichen parallelen Richtung erzeugen, wobei die Vorrichtung Zuführeinrichtungen aufweist, die derart angeordnet sind, dass sie ein zu zerfaserndes Material (30) im geschmolzenen Zustand gleichzeitig auf die Umfangsfläche des ersten Rades (7) einer jeden Maschine (1, 2) gießen, und ferner mit einem Ablageorgan (4), das den Zerfaserungsmaschinen (1, 2) gegenüberliegend in der Kammer (3) angeordnet ist, **dadurch gekennzeichnet, dass die** Hauptachsen (13, 14) von zwei benachbarten Maschinen (1, 2) gemäß einem von Null verschiedenen Winkel angeordnet sind, wobei dieser Winkel bzw. jeder Winkel zwischen zwei benachbarten Maschinen so angepasst ist, dass zwei von den zwei benachbarten Maschinen (1, 2) abgegebene Gasströme sich treffen und verbinden und **dadurch, dass** die Kammer (3) zwei vertikale Wände (5, 6) aufweist, die sich auf zwei Seiten des Ablageorgans (4) im wesentlichen parallel von den am Eintritt angeordneten Maschinen (1, 2) erstrecken, wobei eine zu der ersten Wand (5) benachbarte erste Maschine (1) und eine zu der zweiten Wand (6) benachbarte zweite Maschine (2) so angeordnet sind, dass ihre jeweiligen Hauptachsen (13, 14) auf die Mitte der Kammer (3) hin konvergieren, bevorzugt in einem Winkel von mindestens 2° in Bezug auf die Richtung der Wände (5, 6).

2. Vorrichtung nach Anspruch 1, **dadurch gekennzeichnet, dass** die erste Maschine (1) so ausgelegt ist, dass ihr erstes Schleuderrad (7) das Schmelzematerial (30) gegen die erste Wand (5) abgibt, und die zweite Maschine (2) so ausgelegt ist, dass ihr erstes Schleuderrad (7) das Schmelzematerial (30) auf die zweite Wand (6) hin abgibt, sowie dadurch, dass die Achse (14) der zweiten Maschine (2) mit der zweiten Wand (6) einen Winkel bildet, der größer als derjenige ist, der von der Achse (13) der ersten Maschine (1) mit der ersten Wand (5) gebildet wird.

3. Vorrichtung nach Anspruch 2, **dadurch gekennzeichnet, dass** der erste Winkel in der Größenordnung von 2 bis 6°, bevorzugt in der Größenordnung von 4° ist, und der zweite Winkel in der Größenordnung von 2 bis 10°, bevorzugt in der Größenordnung von 4 bis 8° ist.

4. Vorrichtung nach einem der Ansprüche 1 bis 3, **dadurch gekennzeichnet, dass** in jeder Maschine (1, 2) das zweite Schleuderrad (8) einen Durchmesser von weniger als oder gleich 240 mm aufweist.

5. Vorrichtung nach Anspruch 4, **dadurch gekennzeichnet, dass** eine Verbindungslinie zwischen den Mittelpunkten der zwei ersten Schleuderräder (7, 8) einen Winkel von mehr als 20°, bevorzugt in der Größenordnung von 25°, zur Horizontalen bildet.

6. Vorrichtung nach einem der Ansprüche 1 bis 5, **dadurch gekennzeichnet, dass** der Umfang eines Rades vom Umfang eines benachbarten Rades um eine Strecke von mindestens 40 mm beabstandet ist.

7. Vorrichtung nach einem der Ansprüche 1 bis 6, **dadurch gekennzeichnet, dass** die Gebläseeinrichtungen (17, 18, 19, 20) mindestens eine Ausziehlippe (21, 22, 23, 24) aufweisen, die derart ausgelegt ist/sind, dass ein kontinuierlicher Luftstrom produziert wird, der im wesentlichen den gesamten Außenmantel der Umfangsflächen der Schleuderräder (7, 8, 9, 10) bestreicht.

8. Vorrichtung nach einem der Ansprüche 1 bis 7, **dadurch gekennzeichnet, dass** die Gebläseeinrichtungen (17, 18, 19, 20) so ausgelegt sind, dass sie entlang eines unteren Abschnitts mindestens eines Rades der Kaskade einen breiteren Gasstrom erzeugen.

9. Vorrichtung nach einem der Ansprüche 1 bis 8, **dadurch gekennzeichnet, dass** die Gebläseeinrichtungen (17, 18, 19, 20) in der Nähe eines Schleuderrades ausmünden und dabei in einem Winkel in der Größenordnung von 10 bis 16° in Bezug auf die Drehachse des Rades abweichen.

10. Vorrichtung nach einem der Ansprüche 1 bis 9, **dadurch gekennzeichnet, dass** sie zwischen zwei benachbarten Zerfaserungsmaschinen (1, 2) einen offenen Raum aufweist, der das Zirkulieren von Luft zwischen den Maschinen (1, 2) ermöglicht.
